Europäisches Patentamt

European Patent Office

Office européen des brevets

(11) Publication number: **0 066 360**
**A1**

# (12) EUROPEAN PATENT APPLICATION

(21) Application number: 82301894.0

(22) Date of filing: 08.04.82

(51) Int. Cl.³: **G 06 F 5/00**
**G 06 F 9/30**

(30) Priority: 21.05.81 JP 75724/81

(43) Date of publication of application:
08.12.82 Bulletin 82.49

(84) Designated Contracting States:
DE FR GB

(71) Applicant: TOKYO SHIBAURA DENKI KABUSHIKI
KAISHA
72, Horikawa-cho Saiwai-ku
Kawasaki-shi Kanagawa-ken 210(JP)

(72) Inventor: Iwamura, Jun
4-106, Kita-Isogo-jutaku Azakoshigoe
Isogo-cho Isogo-ku Yokohama-shi(JP)

(74) Representative: Freed, Arthur Woolf et al,
MARKS & CLERK 57-60 Lincoln's Inn Fields
London WC2A 3LS(GB)

(54) Integrated circuit information precessor.

(57) An information processor circuit includes a predetermined number of transfer switches (1) which enable preselected input bits from the input data bus line ($\ell_0$ - $\ell_7$) to be transferred directly to preselected bits of the output data bus line ($L_0$ - $L_7$), whenever the transfer switches (1) are in a conductive state. The circuit substantially increases the speed of operation, such as when a shifting operation is necessary and is designed to be readily incorporated within an integrated circuit chip.

F I G. 3

- 1 -

## Integrated circuit information processor

This invention relates to information processing and more particularly to an integrated circuit information processor in which special information processing is effected.

In general, data processing operations are effected by an operating unit. For example, logic operations and arithmetic operations are executed by an arithmetic logic unit (ALU). However, when special data processing is required, even though it may be simple data processing, the ALU requires a relatively long processing time.

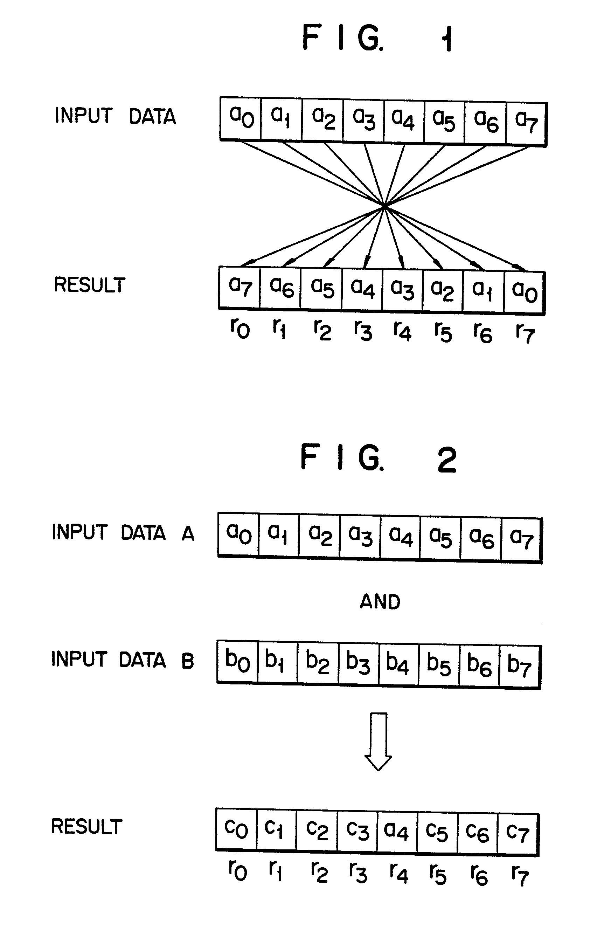

For example, as shown in Fig. 1, when upper bits and lower bits of an 8-bit input data $a_0 - a_7$ are cross-shifted by an operating circuit of the prior art, the shift operation of $a_7$ is effected as follows:

$$\left. \begin{array}{l} \text{Shift left bit} \times 7 \text{ times} \rightarrow \text{Answer } A_7 \\ \text{Prepare a mask data } B_7 = 10000000 \\ A_7 \wedge B_7 \rightarrow \text{save the answer } R \end{array} \right\} \ \dots \ (1)$$

In this operation (1), 9 steps are required. Further the shift operation of $a_6$ is carried out as follows:

$$\left. \begin{array}{l} \text{Shift left 1 bit} \times 5 \text{ times} \rightarrow \text{Answer } A_6 \\ \text{Prepare a mask data } B_6 = 01000000 \\ A_6 \wedge B_6 \rightarrow \text{Answer } C_1 \\ R \vee C_1 \rightarrow \text{save the answer } R \end{array} \right\} \ \dots \ (2)$$

In the operation (2), 8 steps are required. The above operations are carried out in sequence. Finally the shift operation of $a_0$ is carried out as follows:

$$\left.\begin{array}{l} \text{Shift right 1 bit} \times 7 \text{ times} \rightarrow \text{Answer } A_0 \\ \text{Prepare a mask data } B_0 = 00000001 \\ A_0 \wedge B_0 \rightarrow \text{Answer } C_7 \\ R \text{ (which is saved in } a_1 \text{ shifted} \\ \quad \text{operation)} + C_7 \rightarrow \text{Answer } R \end{array}\right\} \dots (3)$$

In the operation (3), 10 steps are required. As mentioned above, to complete all the shift operations and achieve the answer R shown in the operation (3), 55 steps are required.

Further in another example shown in Fig. 2, the result of the logical AND of the input data A with the input data B bit by bit is obtained. The fourth bit of the result C of the AND operation remains as the fourth bit of the input data A. When such operation is carried out using prior art operating units, the following steps are required.

$$\left.\begin{array}{l} A \wedge B \rightarrow \text{Answer } C \\ \text{Prepare a mask data } D = 11110111 \\ C \wedge D \rightarrow \text{Answer } E \\ \text{Prepare a mask data } F = 000010000 \\ A \wedge F \rightarrow \text{Answer } G \\ E \vee G \rightarrow \text{Answer } R \text{ (Final result)} \end{array}\right\} \dots (4)$$

In the operation (4), 6 steps are required. As these examples show, when an operation requiring the shifting of bit positions of data is performed with prior art operating units, complicated processing sequences and longer operating times are required.

A prior art shift circuit is described in "16 bit CMOS/NMOS SOS microprocessor" in microcomputer study material 14, page 7, Jan. 26, 1981 by Jun IWAMURA. In the circuit, a barrel shifter effects right or left operations with the desired number of bits. However the cross-shift operation with the desired number of bits cannot be effected.

The invention has been intended in view of the above deficiencies, and accordingly one object of this invention is to provide a novel integrated circuit information processor which can easily effect higher speed data processing operations such as is necessary with shifting operations.

According to the invention, the desired lines of the input data bus line and the desired lines of the output data bus line are connected through a transfer gate and the bit data of the input data bus line is transferred to the desired bit positions of the output data bus lines by turning on the transfer gate.

To achieve the above object, there is provided an information processing device, comprising:

input data bus, electrically connected to said device, including an input line;

output data bus, electrically connected to said device, including an output line; and

transfer means electrically connected to said device, said input data bus and said output data bus, for directly transferring input data from said input line to said output line.

A more complete appreciation of the invention and many of the attendant advantages thereof will be readily obtained as the same becomes better understood by reference to the following detailed description when considered in connection with the accompanying drawings, wherein:

Fig. 1 is an illustration of a prior art method of shifting 8-bit data;

Fig. 2 is an illustration of another prior art method for shifting 8-bit data;

Fig. 3 is a circuit diagram of one embodiment of the present invention;

Fig. 4 is a circuit diagram of another embodiment of the present invention;

Figs. 5A and 5B are illustrations of other prior art methods for shifting 8-bit data; and

Fig. 6 is a circuit diagram of another embodiment of the present invention.

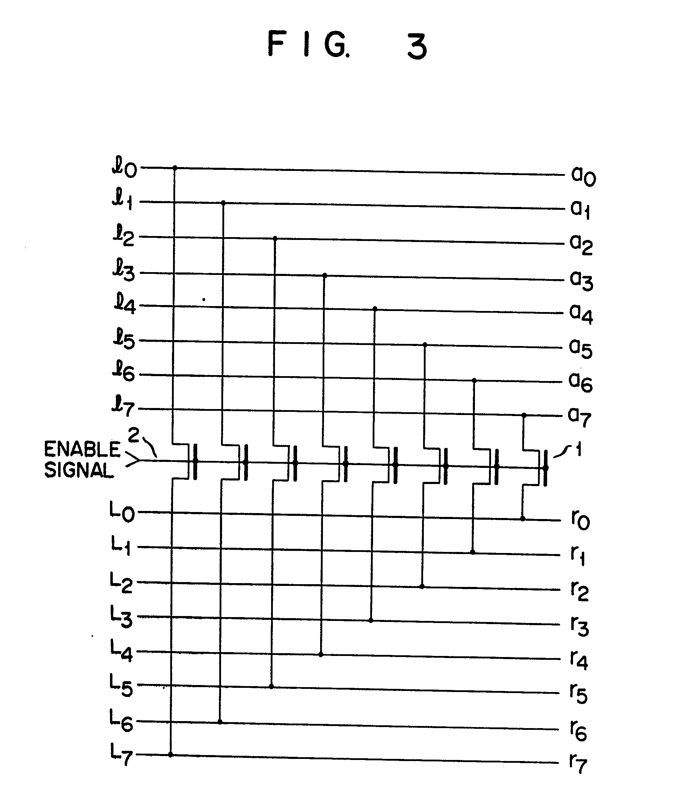

Referring now to the drawings, wherein like reference numerals designate identical or corresponding parts throughout the several views, and more particularly to Fig. 3 thereof, a circuit diagram of one embodiment of an integrated circuit information processor according to the present invention is shown. The circuit is designed for effecting data processing as shown in Fig. 1. As shown in Fig. 3, input data bus line $\ell_0$ through $\ell_7$ and output data bus lines $L_0$ through $L_7$ are connected through transfer gates 1, such as an FET (Field Effect Transistor) such that the respective bit positions of the input data bus line $\ell_0$ through $\ell_7$ correspond to the respective output data bus lines $L_7$ through $L_0$. Each of the transfer gates 1 is connected to the signal wire 2 which provides an enable signal to all of the transfer gates 1, simultaneously. Thus, when an enable signal is applied to the signal line 2, the input data $a_0$ through $a_7$ can be easily transferred at a high speed as the output data $r_7$ through $r_0$, respectively, of the output data bus line. The enable signal is generated according to instructions from a microprogram stored in the processor (if the microprocessor is of the type having microprogram instruction), or from a user program which directly controls the microprocessor.

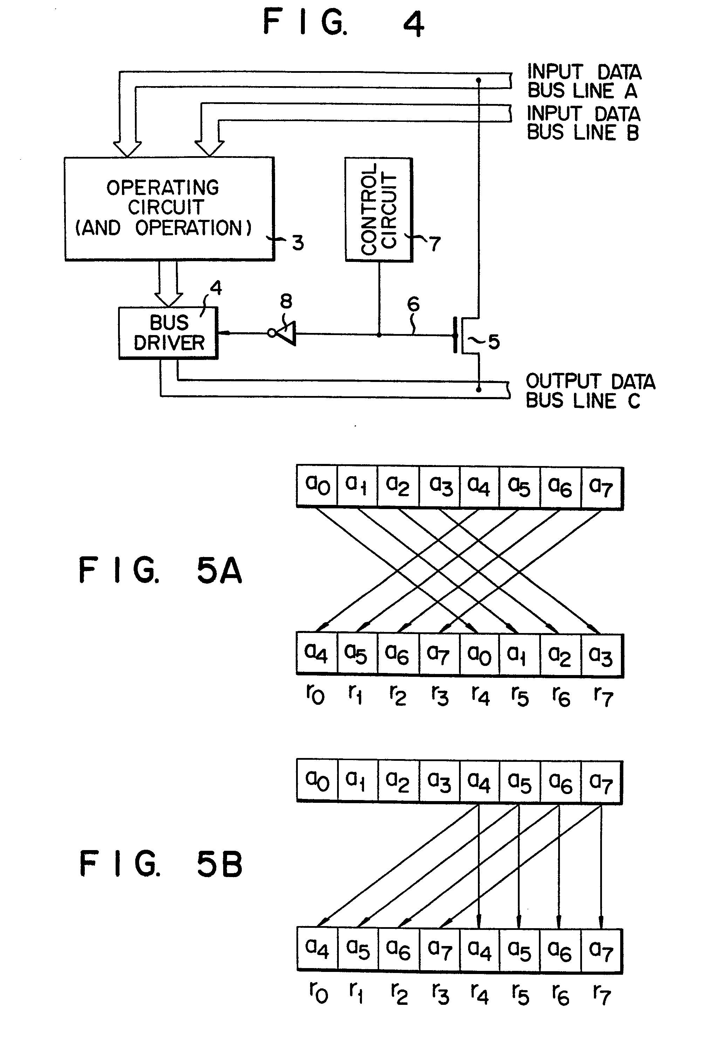

Referring now to Fig. 4, a circuit for another embodiment of the integrated circuit information processor according to the present invention is shown. The circuit in Fig. 4 is prepared for effecting the data processing shown in Fig. 2. The data A and B of the input data bus lines are applied to a logic circuit 3, such as the arithmetic logic unit (ALU) of the processor or other similar circuitry which effects AND operation of the respective bits of the input data A and B and outputs the result through a bus driver 4 to an output data bus line C. On the other hand, the line $\ell_4$ corresponding to the fourth bit of the input data bus line A (counting from the lower bits) and the line $L_4$ corresponding to the fourth bit of the output data bus line C are connected through a transfer gate 5, which is controlled by a signal line 6. When a transfer signal is produced from a control circuit 7 having control structure such as that used in the T-88000 manufactured by Toshiba Corporation in Kawasaki, JAPAN, or the control structures of any other processors well known in the art, the transfer signal is inverted by an inverter 8 and is applied to the bus driver 4 to inhibit the output of data to line $L_4$, corresponding to the fourth bit of the output data bus line C, from the output data produced by the logic circuit 3 through the bus driver 4. This is simply accomplished by an "AND" gate which inhibits output to line $L_4$ whenever there is a bus enable signal to the bus driver and a transfer signal from the control circuit 7. Further, the transfer signal turns on the transfer gate 5 to transfer the data $a_4$ of the input data bus line A directly to the fourth bit of the output data bus line C. As described above, the operation can be processed in one step such that the input data is processed, except for the desired bit, which is left as an original value.

Figs. 5A and 5B show other examples for shifting data bit positions. Fig. 5A illustrates the case in which the upper 4 bits of the 8-bit input data are shifted to the lower 4 bits of the output data and the lower 4 bits of the input data are shifted to the upper 4 bits of the output data.  Fig. 5B illustrates the
case in which the lower 4 bits of the 8-bit input data
are shifted to both the upper 4 bits of the output data
and the lower 4 bits of the output data.

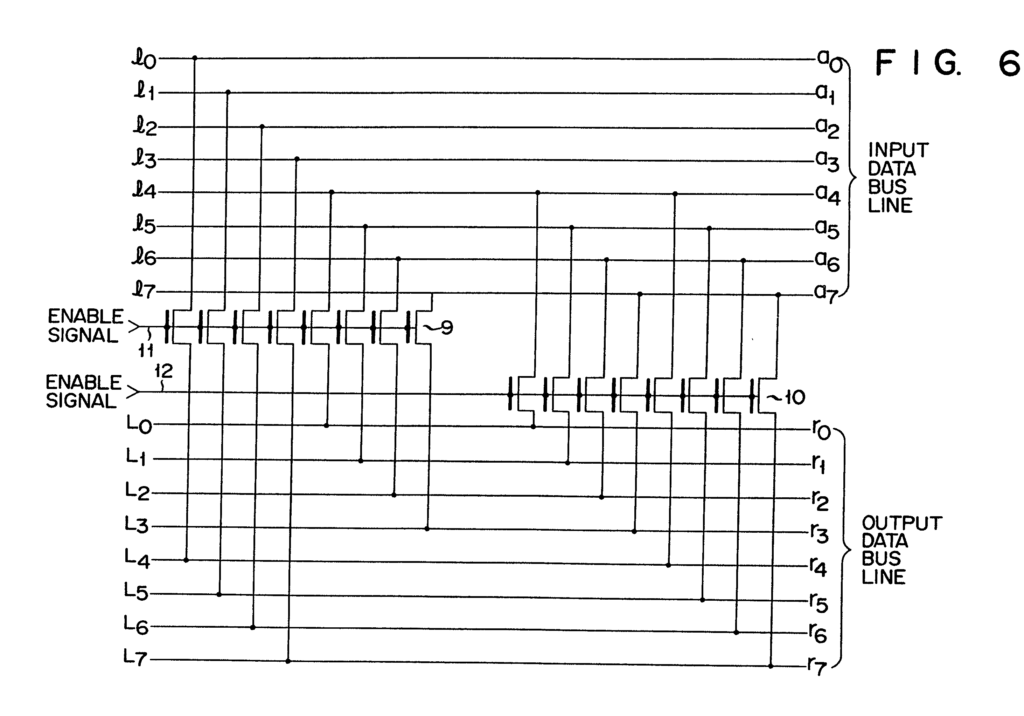

Fig. 6 shows another example of the integrated
circuit information processor according to the present
invention.  The example shown in Fig. 6 is prepared for
effecting the data processing shown in Figs. 5A and 5B.
In both cases, the input data bus lines $\ell_0$ through $\ell_7$
and output data bus lines $L_0$ through $L_7$ are connected
through transfer gates 9 and 10.  When an enable signal,
generated as described with reference to Fig. 3, is
applied to a signal line 11, the shift operation of bit
positions shown in Fig. 5A is effected and when an
enable signal, again generated as described with
reference to Fig. 3, is applied to a signal line 12,
the shift operation of bit positions shown in Fig. 5B
is effected.  As described above, two types of shift
operation of bit positions can be realized simply by
the embodiment shown in Fig. 6.

The shift operation of bit positions is not
limited to the above embodiments and many changes and
modifications can be carried out.  Further the data
length is not limited to 8 bits, and the data length
of 4 bits, 12 bits, 16 bits, 32 bits, 64 bits and any
other bit length can be applied to the invention.

As described above, according to the present
invention, data processing such as shift operation can
be carried out at high speed.  For example, suppose the
capacitance (C) of the output data bus line is 2 pF and
ON resistance (R) of the transfer gate is 10 k$\Omega$, the
data transfer time T is indicated by the following
equation:

$$T = t + 2.2RC = t + 44 \text{ ns}$$

Where t is the charging time (ns) of input data bus line. From the above equation, the substantial operation time can be regarded as 44 ns which is an extremely short time. Further, in the above embodiments according to the invention only one transfer gate for one bit and one signal line which is common for all the transfer gates are needed. Further these transfer gates consume low power and can be buried between the bus line in production. Therefore, the area of a chip for the transfer gates is not increased and only the area for the signal line is slightly increased.

Obviously, numerous (additional) modifications and variations of the present invention are possible in light of the above teachings. It is therefore to be understood that within the scope of the appended claims, the invention may be practiced otherwise than as specifically described herein.

Claims:

1. An information processing device, comprising:
input data bus (ℓ), electrically connected to said device, including an input line;
output data bus (L), electrically connected to said device, including an output line; and
transfer means (1), electrically connected to said device, said input data bus and said output data bus, for directly transferring input data from said input line to said output line.

2. An information processing device, according to claim 1, wherein:
said device includes an enable signal generating means, and said transfer means includes switching means (1), electrically connected to said enable signal generating means, for directly connecting said input line to said output line, whenever an enable signal is generated.

3. An information processing device, according to claim 1, wherein:
said input data bus including a first input data bus (A) and a second input data bus (B), and
said device including a logic unit means (3) for manipulating first input data and second input data;
driver means (4), electrically coupled to said logic unit means, for driving said output data bus;
enable signal generating means (7), electrically coupled to said driver means; and
said transfer means including switching means (5), electrically coupled to said enable signal generating means (7), for directly connecting an input line of said first input data bus (A) to an output line of said output data bus (C).

4. An information processor device according to claim 2 or 3, wherein:

said switching means is a transfer gate (5).

5. An information processor device according to claim 3, further including:

a signal inverter (8), electrically coupled between said driver means (4) and said enable signal generating means (7).

# F I G. 1

INPUT DATA $\boxed{a_0 \mid a_1 \mid a_2 \mid a_3 \mid a_4 \mid a_5 \mid a_6 \mid a_7}$

RESULT $\boxed{a_7 \mid a_6 \mid a_5 \mid a_4 \mid a_3 \mid a_2 \mid a_1 \mid a_0}$
$\quad\quad\quad\; r_0 \quad r_1 \quad r_2 \quad r_3 \quad r_4 \quad r_5 \quad r_6 \quad r_7$

# F I G. 2

INPUT DATA A $\boxed{a_0 \mid a_1 \mid a_2 \mid a_3 \mid a_4 \mid a_5 \mid a_6 \mid a_7}$

AND

INPUT DATA B $\boxed{b_0 \mid b_1 \mid b_2 \mid b_3 \mid b_4 \mid b_5 \mid b_6 \mid b_7}$

RESULT $\boxed{c_0 \mid c_1 \mid c_2 \mid c_3 \mid a_4 \mid c_5 \mid c_6 \mid c_7}$
$\quad\quad\quad\; r_0 \quad r_1 \quad r_2 \quad r_3 \quad r_4 \quad r_5 \quad r_6 \quad r_7$

# F I G. 3

## F I G. 4

INPUT DATA
BUS LINE A

INPUT DATA
BUS LINE B

OPERATING
CIRCUIT
(AND OPERATION) — 3

CONTROL
CIRCUIT — 7

BUS
DRIVER — 4

8

6

~5

OUTPUT DATA
BUS LINE C

## F I G. 5A

| $a_0$ | $a_1$ | $a_2$ | $a_3$ | $a_4$ | $a_5$ | $a_6$ | $a_7$ |
|---|---|---|---|---|---|---|---|

| $a_4$ | $a_5$ | $a_6$ | $a_7$ | $a_0$ | $a_1$ | $a_2$ | $a_3$ |
|---|---|---|---|---|---|---|---|
| $r_0$ | $r_1$ | $r_2$ | $r_3$ | $r_4$ | $r_5$ | $r_6$ | $r_7$ |

## F I G. 5B

| $a_0$ | $a_1$ | $a_2$ | $a_3$ | $a_4$ | $a_5$ | $a_6$ | $a_7$ |
|---|---|---|---|---|---|---|---|

| $a_4$ | $a_5$ | $a_6$ | $a_7$ | $a_4$ | $a_5$ | $a_6$ | $a_7$ |
|---|---|---|---|---|---|---|---|
| $r_0$ | $r_1$ | $r_2$ | $r_3$ | $r_4$ | $r_5$ | $r_6$ | $r_7$ |

0066360

F I G. 6

INPUT DATA BUS LINE

OUTPUT DATA BUS LINE

ENABLE SIGNAL

ENABLE SIGNAL

European Patent
Office

**EUROPEAN SEARCH REPORT**

Application number

EP 82 30 1894

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,A | GB-A-1 537 262 (THE POST OFFICE) <br> * Page 1, lines 25-72 and claim 1 * <br><br> --- | 1,3,4 | G 06 F 5/00 <br> G 06 F 9/30 |
| A | GB-A-1 231 287 (IBM) <br> * From page 1, line 64 to page 2, line 1 * <br><br> ----- | 1 | |

| | | | TECHNICAL FIELDS SEARCHED (Int. Cl. ³) |
|---|---|---|---|
| | | | G 06 F |

The present search report has been drawn up for all claims

| Place of search <br> THE HAGUE | Date of completion of the search <br> 30-07-1982 | Examiner <br> BARRACO G.S. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document